Europäisches Patentamt

European Patent Office

Office européen des brevets

(11) Numéro de publication: **0 233 425 B1**

(12) **FASCICULE DE BREVET EUROPEEN**

(45) Date de publication de fascicule du brevet:
07.08.91

(51) Int. Cl.5: **H02P 9/36**

(21) Numéro de dépôt: **86402815.4**

(22) Date de dépôt: **16.12.86**

(54) Procédé de régulation d'un alternateur synchrone sans balais et dispositif pour la mise en oeuvre de ce procédé.

(30) Priorité: **19.12.85 FR 8518872**

(43) Date de publication de la demande:
**26.08.87 Bulletin 87/35**

(45) Mention de la délivrance du brevet:
**07.08.91 Bulletin 91/32**

(84) Etats contractants désignés:
**DE ES FR GB IT**

(56) Documents cités:
**DE-A- 1 952 068**
**DE-A- 2 353 832**
**GB-A- 2 071 430**
**US-A- 3 132 296**

**DESIGN ENGINEERING, mai 1980, page 23, Londres, GB; "Short-circuit current excitation for brushless ac generators"**

(73) Titulaire: **SOCIETE LEROY SOMER**
**Boulevard Marcellin Leroy**
**F-16015 Angoulême(FR)**

(72) Inventeur: **Fauvet, Jean-Pierre**
**353 rue de Mareilly**
**F-45590 Saint-Cyr-En-Val(FR)**

(74) Mandataire: **Bouju, André**
**Cabinet André Bouju B.P. 6250**
**F-75818 Paris Cédex 17(FR)**

Rank Xerox (UK) Business Services

## Description

La présente invention concerne un procédé de régulation d'un alternateur synchrone sans balais, comprenant une excitatrice tournante à inducteur d'excitation fixe, notamment pour la régulation de tension, de l'intensité de court-circuit et la répartition de la puissance réactive dans le cas de marche parallèle, et un dispositif de régulation pour la mise en oeuvre de ce procédé.

On connaît des alternateurs qui sont pourvus de régulateurs auxquels sont associés des transformateurs de tension et d'intensité isolés. Ces régulateurs sont en mesure d'assurer convenablement leur rôle en particulier dans le cas de la marche parallèle.

Ils présentent cependant les inconvénients qu'en raison de l'utilisation obligatoire des transformateurs, ils sont coûteux et encombrants et, de plus, ne permettent pas de réguler les intensités de court-circuit avec précision.

Par ailleurs, le document GB-A-2 071 430 décrit un procédé et un dispositif pour la régulation d'un alternateur synchrone sans balais, comprenant une excitatrice tournante à inducteur d'excitation fixe alimenté par un enroulement auxiliaire logé dans le stator de l'alternateur et recueillant la tension de troisième harmonique de l'alternateur. Le courant parcourant ledit inducteur d'excitation est réglé en fonction de la tension de sortie de l'alternateur.

La présente invention a pour but de pallier les inconvénients des régulateurs connus.

L'invention propose ainsi un procédé de régulation d'un alternateur synchrone sans balais, comprenant une excitatrice tournante à inducteur d'excitation fixe, notamment pour la régulation de tension, de l'intensité de court-circuit et la répartition de la puissance réactive dans le cas de marche parallèle, l'inducteur d'excitation fixe étant alimenté par un premier enroulement auxiliaire logé dans le stator de l'alternateur, ledit premier enroulement recueillant la tension de troisième harmonique de l'alternateur, le courant parcourant ledit inducteur d'excitation étant réglé en fonction de la tension de sortie de l'alternateur.

Suivant l'invention, ce procédé de régulation est caractérisé en ce qu'on alimente en outre l'inducteur d'excitation fixe par un second enroulement auxiliaire logé dans le stator de l'alternateur, ledit second enroulement recueillant la tension fondamentale de l'alternateur et en ce qu'on règle le courant parcourant ledit inducteur en fonction de ladite tension fondamentale, de ladite tension de troisième harmonique et de la tension de sortie de l'alternateur, pour réguler sélectivement cette tension de sortie, la tension à vide, le courant de court-circuit et le statisme de l'alternateur.

Suivant l'invention, un même circuit électronique peu encombrant permet en particulier d'obtenir un courant de court-circuit de valeur prédéterminée alors qu'avec les dispositifs de régulation connus, celui-ci est variable, et de régler simplement le statisme de la machine ce qui permet d'assurer une répartition convenable de la puissance réactive débitée par plusieurs machines reliées en parallèle aux bornes d'une même charge.

Selon une caractéristique avantageuse de l'invention, on utilise la tension aux bornes de l'enroulement inducteur d'excitation pour régler le statisme négatif de l'alternateur et on utilise la tension aux bornes de l'enroulement auxiliaire de troisième harmonique pour régler le statisme positif de cet alternateur.

Selon une autre caractéristique avantageuse du procédé selon l'invention, on établit des fractions de tension variables à partir des tensions à la sortie de l'alternateur, aux bornes de l'enroulement de troisième harmonique et de l'inducteur d'excitation, on forme la somme de ces fractions, la compare à une valeur de référence prédéterminée et règle le courant d'excitation à travers ledit inducteur en fonction du résultat de la comparaison.

Dans le dispositif pour la mise en oeuvre du procédé précité, le circuit d'alimentation de l'inducteur d'excitation comprend un premier enroulement auxiliaire qui recueille la tension de troisième harmonique de l'alternateur, ainsi qu'un organe de régulation du courant d'excitation.

Suivant l'invention, ce dispositif est caractérisé en ce que le circuit d'alimentation de l'inducteur d'excitation comprend en outre un second enroulement auxiliaire qui recueille la tension fondamentale de l'alternateur, et en ce que ledit organe de régulation est commandé d'une part en fonction des tensions aux bornes de l'enroulement d'excitation et de l'enroulement de troisième harmonique et d'autre part en fonction de la tension de sortie de l'alternateur.

Le dispositif précité est ainsi particulièrement bien adapté à la mise en oeuvre du procédé conforme à l'invention.

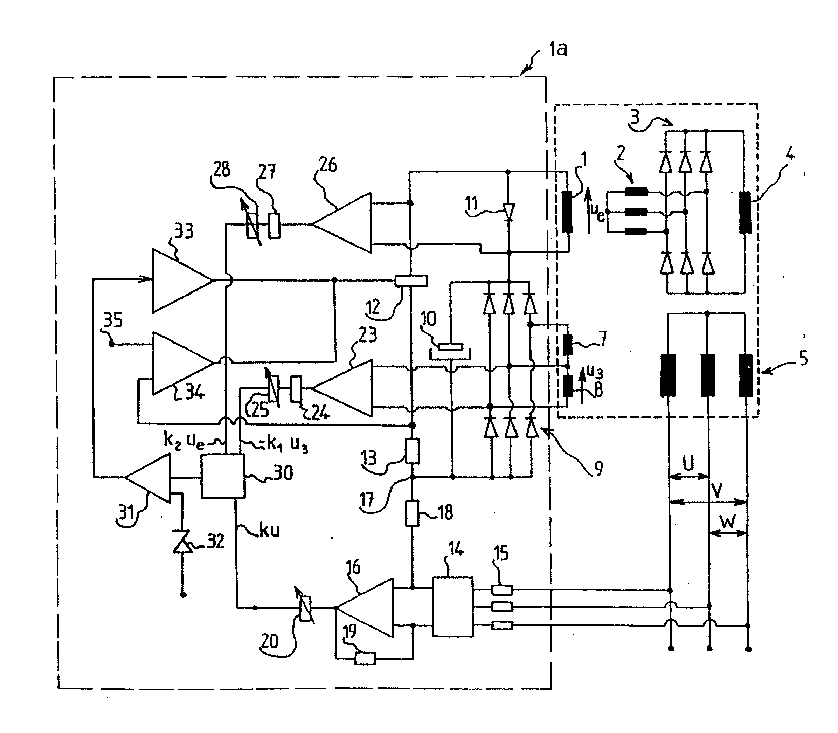

L'invention sera mieux comprise, et d'autres buts, caractéristiques, détails et avantages de celle-ci apparaîtront plus clairement au cours de la description explicative qui va suivre faite en référence à la figure unique donnée uniquement à titre d'exemple et illustrant sous forme d'un schéma bloc un mode de réalisation de l'invention.

La figure unique représente à droite la structure connue d'un alternateur synchrone comprenant un alternateur auxiliaire d'excitation, formant excitatrice à inducteur fixe 1 et induit tournant 2 produisant un courant alternatif et un redresseur 3 qui transforme ce courant alternatif en courant continu pour alimenter la roue polaire 4 d'un alternateur principal à inducteur fixe 5 logé dans le stator (non représenté) dudit alternateur synchrone et inducteur tournant formé par ladite roue polaire 4.

L'ensemble formé par l'inducteur 1 et l'induit 2 constitue ainsi un amplificateur tournant connu en lui-même.

La présente invention concerne le dispositif d'excitation de l'alternateur. Celui-ci comprend deux enroulements auxiliaires monophasés 7 et 8, qui sont logés dans le stator. L'enroulement 7 est destiné à délivrer une tension d'harmonique fondamentale et présente un pas d'enroulement égal au pas polaire, c'est-à-dire par exemple qu'il occupe un nombre d'encoches du circuit magnétique statorique égal à celui d'un pole statorique. L'enroulement 8 présente un pas qui est égal à un tiers du pas polaire et est donc adapté pour recueillir la troisième harmonique du champ harmonique. Les enroulements 7 et 8 sont respectivement dimensionnés pour assurer le seuil d'intensité nécessaire à l'excitation en charge et à celle en court-circuit. On sait en effet qu'en court-circuit, la tension aux bornes de l'enroulement 7 sera sensiblement nulle tandis que celle aux bornes de l'enroulement 8 sera non nulle, du fait de la déformation du champ magnétique dans le stator causée par la réaction magnétique d'induit. Par ailleurs, les enroulements 7 et 8 pourrant comprendre selon le type de machine, une ou plusieurs bobines reliées en série ou parallèle.

Les deux enroulements 7 et 8 sont reliés à un redresseur triphasé 9 débitant sur un condensateur de lissage 10.

On constate que le redresseur 9 est interconnecté dans le circuit d'alimentation de l'enroulement fixe d'excitation 1 aux bornes duquel est montée en parallèle une diode de roue libre 11. Ce circuit comporte en outre un organe 12 de régulation du courant d'excitation et une résistance 13 interconnectée entre la sortie du pont redresseur 9, 10 et l'organe de régulation 12. Cet organe de régulation 12 est avantageusement un transistor dont la commande peut être soit du type proportionnel, le transistor se comportant alors comme une résistance variable, soit du type à découpage.

Le circuit d'excitation de l'alternateur synchrone comprend un régulateur 1a auquel sont appliquées la tension triphasée U, V, W de sortie de l'alternateur et les tensions $u_e$, $u_3$ présentes aux bornes de l'enroulement d'excitation 1 et de l'enroulement auxiliaire de troisième harmonique 8.

Le circuit de traitement de la tension triphasée U, V, W de l'alternateur comprend un redresseur triphasé 14 dont chaque entrée comporte une résistance 15 d'une valeur ohmique élevée telle que par exemple de l'ordre de 2M $\Omega$, et un amplificateur opérationnel 16 à deux entrées reliées aux sorties du redresseur 14. Les deux entrées de l'amplificateur 16 sont connectées respectivement à un potentiel neutre 17 par l'intermédiaire d'une résistance 18 et à la sortie de celui-ci par l'intermédiaire d'une résistance 19. Pour établir une fraction souhaitée variable, à la sortie du circuit de traitement précité, de la tension redressée de la tension triphasée U, V, W, on a prévu à la sortie de l'amplificateur 16 un organe de fractionnement de tension, tel qu'un potentiomètre, désigné sur la figure par la référence 20. Bien entendu, on pourrait également réaliser l'une des résistances 18 ou 19 sous forme d'un potentiomètre pour obtenir cette fraction désirée de la tension redressée de la tension prélevée à la sortie de l'alternateur. A la borne de sortie du potentiomètre 20, on dispose par conséquent d'une tension ku, k représentant le coefficient de fractionnement du potentiomètre 20 et u étant la valeur moyenne de la tension triphasée $\overline{U, V, W}$.

Le circuit de traitement de la tension $u_3$ prélevée aux bornes de l'enroulement auxiliaire 8 de troisième harmonique comprend un amplificateur différentiel 23 relié à un dispositif de redressement et de filtrage 24 lui-même relié à une unité de fractionnement variable 25 de la tension continue ainsi obtenue, telle que par exemple un potentiomètre, de manière à disposer à la sortie de celui-ci d'une tension négative $-k_1 u_3$, $k_1$ représentant le coefficient de fractionnement du potentiomètre 25.

Le circuit de traitement de la tension $u_e$ prélevée aux bornes de l'inducteur fixe, c'est-à-dire de l'enroulement d'excitation 1, comprend un amplificateur différentiel 26 relié à un filtre 27, lui-même relié à une unité de fractionnement 28 de la tension à la sortie du filtre 27. Cette unité pourrait être formée par un potentiomètre. On obtient ainsi à la sortie de l'unité 28 une tension $k_2 u_e$, $k_2$ représentant le coefficient de fractionnement du potentiomètre 28.

Les trois tensions ku, $k_2 u_e$ et $-k_1 u_3$ sont appliquées à un circuit additionneur 30 qui transmet la somme de ces trois tensions à un comparateur 31 dont l'entrée de référence reçoit une tension de référence fixe déterminée par exemple par une diode zener 32. On peut noter qu'au lieu d'être fixe, la tension de référence appliquée à l'entrée de référence du comparateur 31 pourrait être variable et asservie par exemple à la fréquence ou au cos $\Phi$ de l'alternateur. La sortie du comparateur 31 est reliée à un amplificateur intégrateur proportionnel 33, c'est-à-dire à réponse transitoire rapide et erreur permamente sensiblement nulle, dont la sortie est reliée à l'entrée de commande de l'organe de régulation 12 du courant d'excitation traversant l'inducteur fixe 1.

Ainsi, selon le résultat de la comparaison entre la somme des trois tensions ku, $k_2 u_e$ et $-K_1 u_3$ et la tension de référence fournie par la diode zener 32, on agira automatiquement sur le transistor 12 pour réguler de manière appropriée le courant d'excitation.

On constate en outre que la tension aux bornes de la résistance 13 montée en série avec l'organe de régulation 12 est appliquée à une entrée d'un comparateur 34 dont l'autre entrée reçoit une tension de référence 35. La sortie du comparateur 34 est reliée à l'entrée de commande de l'organe de régulation 12 du courant d'excitation. Ainsi, la tension aux bornes de la résistance 13 permet de limiter l'intensité dans l'inducteur 1. Le courant d'excitation maximal peut donc être rigoureusement limité à une valeur choisie. Autrement dit, on peut en réglant la valeur de la résistance 13 de façon convenable ajuster l'intensité de court-circuit de l'alternateur dont on sait qu'elle est proportionnelle à l'intensité du courant d'excitation.

Concernant le fonctionnement du dispositif de régulation selon la présente invention, qui vient d'être décrit, il est à noter que les tensions de l'alternateur seront régulées selon la loi :

$$ku + k_2u_e - k_1u_3 = C$$

C étant une tension constante correspondant à la grandeur de référence du comparateur 31, c'est-à-dire la tension de référence fournie par la diode zener 32.

En marche à vide, la tension triphasée à la sortie de l'amplificateur peut être régulée en choisissant le coefficient k de façon appropriée et en annulant les coefficients $k_1$ et $k_2$. Il s'est avéré qu'en jouant sur les valeurs de $k_1$ et $k_2$, on peut modifier le statisme de l'alternateur.

On sait que le statisme d'un alternateur est par exemple défini, en charge, par la variation de sa tension de sortie en fonction de la puissance débitée par cet alternateur. Ainsi ledit statisme peut être soit négatif, soit positif (on parle alors de "compoundage"), un statisme nul correspondant à un état de fonctionnement théorique de l'alternateur dit "astatique" qu'on obtiendrait avec une régulation parfaite.

Il résulte de la loi de régulation précitée du régulateur selon l'invention et des lois de variations de la tension d'excitation $u_e$ et de la tension de troisième harmonique $u_3$ (cette dernière variant naturellement en fonction du cos Φ de l'alternateur et du courant qu'il débite) que le statisme positif est proportionnel à $k_1$ tandis que le statisme négatif est proportionnel à $k_2$.

On sait par ailleurs que lorsque deux alternateurs du type mentionné au début débitent en parallèle sur une charge inductive (ou selfique ), il est impératif que la puissance réactive délivrée par chacune d'entre elles soit proportionnelle à sa puissance nominale. Cela implique en particulier que les deux machines présentent le même statisme négatif. De même, si ces deux machines débitent en parallèle sur une charge capacitive, il faut qu'elles présentent toutes deux le même statisme positif. La marche en parallèle des deux machines ne peut avoir lieu que si les conditions précitées sont respectées. On comprend donc l'intérêt particulier de l'invention dans ce cas de fonctionnement. La régulation du statisme permet aussi dans tous les cas d'assurer que le cos Φ de la machine varie identiquement en valeur et sens à celui de la charge.

Grâce au dispositif de régulation proposé par l'invention, il est possible, tout en ayant un fort courant de court-circuit, d'ajuster celui-ci à la valeur souhaitée, une fois passés les phénomènes transitoires. En mettant à profit l'évolution de l'amplitude du champ de troisième harmonique en fonction de l'intensité et du cos Φ de la charge, le dispositif selon l'invention assure la répartition de l'énergie réactive d'alternateurs couplés en parallèle. Cette disposition est encore plus intéressante pour des machines moyenne tension qui utilisent de coûteux et encombrants transformateurs dont l'invention permet d'éviter l'emploi. En bénéficiant de l'isolement constructif des enroulements auxiliaires 7, 8 et en traitant la tension triphasée U, V, W à la sortie de l'alternateur dans un circuit à entrée à haute impédance, l'invention permet ainsi d'obtenir le contrôle de la tension de l'alternateur sans transformateur. La présence des résistances 15 de forte valeur ohmique à l'entrée du redresseur 14 protège également le régulateur 1a contre les coups de foudre.

Le réglage du statisme de l'alternateur au moyen des potentiomètres 25 et 28 permet enfin de maîtriser aisément la tension de l'alternateur pour obtenir la courbe de régulation souhaitée au cos Φ choisi.

**Revendications**

1. Procédé de régulation d'un alternateur synchrone sans balais, comprenant une excitatrice tournante (2) à inducteur d'excitation fixe (1), notamment pour la régulation de tension, de l'intensité de court-circuit et la répartition de la puissance réactive dans le cas de marche parallèle, l'inducteur d'excitation fixe (1) étant alimenté par un premier enroulement auxiliaire (8) logé dans le stator de l'alternateur, ledit premier enroulement (8) recueillant la tension de troisième harmonique de l'alternateur, le courant parcourant ledit inducteur d'excitation (1) étant réglé en fonction de la tension de sortie de l'alternateur, caractérisé en ce qu'on alimente en outre l'inducteur d'excitation fixe (1) par un second enroulement auxiliaire (7) logé dans le stator de l'alternateur, ledit second enroulement (7) recueillant la tension fondamentale de l'alternateur et en ce qu'on règle le courant parcourant ledit inducteur (1) en fonction de ladite tension fondamentale, de ladite tension de troisième harmonique et de la tension de sortie de l'alternateur, pour réguler sélectivement cette tension de sortie, la tension à vide, le courant de court-circuit et le statisme de l'alternateur.

2. Procédé selon la revendication 1, caractérisé en ce que l'on utilise la tension $(u_e)$ aux bornes de l'inducteur d'excitation (1) précité pour régler le statisme négatif de l'alternateur.

3. Procédé selon la revendication 1 ou 2, caractérisé en ce que l'on utilise la tension $(u_3)$ aux bornes de l'enroulement auxiliaire (8) de troisième harmonique pour régler le statisme positif de l'alternateur.

4. Procédé selon l'une des revendications 1 à 3, caractérisé en ce que l'on établit des fractions de tension variables à partir de la tension (U, V, W) à la sortie de l'alternateur, de la tension $(u_3)$ aux bornes de l'enroulement (8) de troisième harmonique et de la tension $(u_e)$ aux bornes de l'inducteur d'excitation (1), forme la somme de ces fractions et la compare à une valeur de consigne (C) prédéterminée et règle le courant d'excitation de l'inducteur (1) en fonction du résultat de cette comparaison.

5. Procédé selon la revendication 4, caractérisé en ce que, pour la répartition de la puissance réactive dans le cas de marche en parallèle de plusieurs alternateurs, on règle la tension de sortie (U, V, W) de l'alternateur pour la marche à vide en annulant les fractions $(k_1 U_3, k_2 u_e)$ des tensions obtenues à partir des tensions aux bornes de l'enroulement de troisième harmonique (8) et d'excitation (1) et on ajuste ensuite négativement ou positivement le statisme de l'alternateur à la valeur souhaitée par variation appropriée des coefficients $k_2$ ou $k_1$.

6. Dispositif pour la mise en oeuvre du procédé conforme à l'une des revendications précédentes, constitué d'un circuit d'alimentation de l'inducteur d'excitation comprenant un premier enroulement auxiliaire (8) qui recueille la tension de troisième harmonique de l'alternateur, ainsi qu'un organe (12) de régulation du courant d'excitation, caractérisé en ce que le circuit d'alimentation de l'inducteur d'excitation comprend en outre un second enroulement auxiliaire (7) qui recueille la tension fondamentale de l'alternateur, et en ce que ledit organe de régulation (12) est commandé d'une part en fonction des tensions $(u_e, u_3)$ aux bornes de l'enroulement d'excitation (1) et de l'enroulement (8) de troisième harmonique et d'autre part en fonction de la tension de sortie (U, V, W) de l'alternateur.

7. Dispositif selon la revendication 6, caractérisé en ce que le régulateur (1a) comprend un redresseur (14) à haute impédance d'entrée relié à la sortie de l'alternateur et un amplificateur opérationnel (16) ainsi que des moyens (20) de fractionnement de tension pour établir une fraction variable (ku) indicative de la tension de sortie (U, V, W) de l'alternateur.

8. Dispositif selon la revendication 6 ou 7, caractérisé en ce qu'il comporte un circuit de traitement de la tension $(u_3)$ prélevée aux bornes de l'enroulement (8) de troisième harmonique comprenant essentiellement des moyens redresseurs (24) et une unité de fractionnement (25) avantageusement formée par un potentiomètre, pour établir une fraction variable $(-k_1 u_3)$ indicative de ladite tension aux bornes de l'enroulement (8).

9. Dispositif selon l'une des revendications 6 à 8, caractérisé en ce qu'il comporte un circuit de traitement de la tension $(u_e)$ aux bornes de l'inducteur d'excitation (1) comprenant un amplificateur (26), un filtre (27) et une unité de fractionnement de tension (28) telle qu'un potentiomètre, pour établir une fraction variable $(k_2 u_e)$ de ladite tension aux bornes de l'enroulement d'excitation.

10. Dispositif selon les revendications 7, 8 et 9, caractérisé en ce que les trois fractions de tension de régulation $(ku, k_2 ue, -k_1 u_3)$ sont transmises à un circuit additionneur comparateur (30, 31) à l'entrée de référence duquel est appliquée une tension de référence prédéterminée (C), la sortie du comparateur (31) étant reliée par l'intermédiaire d'un amplificateur intégrateur proportionnel (33) à l'organe de commande (12) du circuit d'excitation de l'inducteur d'excitation (1), cet organe étant par exemple un transistor de puissance.

11. Dispositif selon l'une des revendications 6 à 10, caractérisé en ce que le circuit d'alimentation de l'inducteur d'excitation (1) comprend une résistance (13) dont la tension présente à ses bornes est appliquée à un comparateur (34) dont l'entrée de référence reçoit une tension de référence et dont la sortie est reliée à l'organe de commande (12) pour limiter l'intensité du courant d'excitation et par conséquent l'intensité de court-circuit à une valeur prédéterminée.

12. Alternateur synchrone sans balais, caractérisé en ce qu'il comprend un dispositif de régulation conforme à l'une des revendications 6 à 11.

## Claims

1. A method of regulating a brushless synchronous alternator comprising a rotating exciter (2) having a stationary exciting field (1), more particularly for the regulation of the voltage, shortcircuit current and reactive power distribution in the case of parallel operation, the stationary exciting field (1) being energised by a first auxiliary winding (8) received in the alternator stator, the first winding (8) receiving the third-harmonic voltage of the alternator, the current which flows through the exciting field (1) being controlled in dependence upon the alternator output voltage, characterised in that the stationary exciting field (1) is also energised by a second auxiliary winding (7) which is received in the alternator stator and which receives the fundamental voltage of the alternator, and the current flowing through the stationary exciting field (1) is controlled in dependence upon the fundamental voltage, the said third-harmonic voltage and the alternator output voltage to selectively regulate the last-mentioned voltage, the off-load voltage, the shortcircuit current and the droop of the alternator.

2. A method according to claim 1, characterised in that the voltage ($u_e$) across the stationary exciting field (1) is used to control negative droop of the alternator.

3. A method according to claim 1 or 2, characterised in that the voltage ($u_3$) across the third-harmonic auxiliary winding (8) is used to control positive droop of the alternator.

4. A method according to any of claims 1 to 3, characterised in that variable voltage fractions are prepared from the alternator output voltage (U, V, W), from the voltage ($u_3$) across the third-harmonic winding (8) and from the voltage ($U_e$) across the stationary exciting field (1) and the sum of such fractions is formed and compared with a predetermined reference value (C) and controls the exciting current of the stationary exciting field (1) in dependence upon the result of such comparison.

5. A method according to claim 4, characterised in that to distribute the reactive power in the case of parallel operation of a number of alternators, the output voltage (U, V, W) of the alternator is adjusted for off-load operation by cancelling the voltage fractions ($k_1U_3$, $k_2u_e$) prepared from the voltages across the third-harmonic winding (8) and across the stationary field (1), whereafter alternator droop is adjusted negatively or positively to the required value by appropriate variation of the factors $k_2$ or $k_1$.

6. A system for the practice of the method according to any of the previous claims and comprising a circuit for energising the exciting field, the latter circuit comprising a first auxiliary winding (8) which receives the third-harmonic voltage of the alternator and an element (12) for regulating the exciting current, characterised in that the circuit for energising the stationary exciting field (1) also comprises a second auxiliary winding (7) which receives the fundamental voltage of the alternator, and the regulating element (12) is controlled in dependence upon the voltages ($u_e$, $u_3$) across the stationary exciting winding (1) and across the third-harmonic winding (8) and in dependence upon the alternator output voltage (U, V, W).

7. A system according to claim 6, characterised in that the regulator (1a) comprises a high input impedance rectifier (14) connected to the alternator output, an operations amplifier (16) and voltage-dividing means (20) to prepare a variable fraction (ku) representing the alternator output voltag (U, V, W).

8. A system according to claim 6 or 7, characterised in that it comprises a circuit for processing the voltage ($u_3$) sampled across the third-harmonic winding (8) and mainly comprising rectifying means (24) and a voltage-dividing unit (25), advantageously in the form of a potentiometer, to produce a variable fraction (-$k_1u_3$) representing the voltage across the said first auxiliary winding (8).

9. A system according to any of claims 6 to 8, characterised in that it comprises a circuit for processing the voltage ($u_e$) across the stationary exciting field (1) and comprising an amplifier (26), a filter (27) and a voltage-dividing unit (28), such as a potentiometer, to prepare a variable fraction ($k_2u_e$) of the voltage across the exciting winding.

10. A system according to claims 7 - 9, characterised in that the three regulation voltage fractions ($ku$, $k_2u_e$, $-k_1uj_3$) are transmitted to an adding and comparator circuit (30, 31) which receives a predetermined reference voltage (C) at its reference input, the comparator output being connected by way of a PI amplifier (33) to the control element (12) of the circuit for exciting the exciting field (1), the control element (12) being, for example, a power transistor.

11. A system according to any of claims 6 to 10, characterised in that the circuit energising the exciting field (1) comprises a resistance (13), the voltage across which is applied to a comparator (34) whose reference input receives a reference voltage and whose output is connected to the control element (12) to limit the strength of the exciting current and, therefore, the shortcircuit current to a predetermined value.

12. A synchronous brushless alternator, characterised in that it comprises a regulating system according to any of claims 6 to 11.

**Patentansprüche**

1. Verfahren zur Regelung eines bürstenlosen Synchronwechselstromgenerators mit einem rotierenden Erreger (2), der mit einem festen Erregerinduktor (1) zusammenwirkt, insbesondere zur Regelung der Spannung, der Kurzschlußstromstärke und der Blindleistungsverteilung im Falle des Paralellbetriebs, wobei der feste Erregerinduktor (1) durch eine in dem Stator des Wechselstromgenerators untergebrachte erste Hilfswicklung (8) gespeist wird, die die Spannung der dritten Harmonischen des Wechselstromgenerators empfängt, und der den Erregerinduktor (1) durchlaufende Strom in Abhängigkeit von der Ausgangsspannung des Wechselstromgenerators geregelt wird, dadurch gekennzeichnet, daß ferner der feste Erregerinduktor (1) durch eine in den Stator des Wechselstromgenerators untergebrachte zweite Hilfswicklung (7) gespeist wird, die die Grundspannung des Wechselstromgenerators empfängt, und daß der den Erregerinduktor (1) durchlaufende Strom in Abhängigkeit von der Grundspannung, der Spannung der dritten Harmonischen und der Ausgangsspannung des Wechselstromgenerators geregelt wird, um selektiv diese Ausgangsspannung, die Leerlaufspannung, den Kurzschlußstrom und die Statik des Wechselstromgenerators zu regeln.

2. Verfahren nach Anspruch 1, dadurch gekennzeichnet, daß die Spannung ($u_e$) an den Anschlüssen des genannten Erregerinduktors (1) verwendet wird, um die negative Statik des Wechselstromgenerators zu regeln.

3. Verfahren nach Anspruch 1 oder 2, dadurch gekennzeichnet, daß die Spannung ($u_3$) an den Anschlüssen der Hilfswicklung (8) für die dritte Harmonische verwendet wird, um die positive Statik des Wechselstromgenerators zu regeln.

4. Verfahren nach einem der Ansprüche 1 bis 3, dadurch gekennzeichnet, daß variable Spannungsbruchteile ausgehend von der Spannung (U, V, W) am Ausgang des Wechselstromgenerators, der Spannung ($u_3$) an den Anschlüssen der Wicklung (8) für die dritte Harmonische und der Spannung ($u_e$) an den Anschlüssen des Erregerinduktors (1) gebildet werden, die Summe dieser Bruchteile gebildet wird und sie mit einem vorbestimmten Sollwert (C) verglichen sowie der Erregerstrom des Induktors (1) in Abhängigkeit vom Ergebnis dieses Vergleichs geregelt wird.

5. Verfahren nach Anspruch 4, dadurch gekennzeichnet, daß zur Blindleistungsverteilung im Falle des Parallelbetriebs mehrerer Wechselstromgeneratoren die Ausgangsspannung (U, V, W) des Wechselstromgenerators für den Leerlaufbetrieb geregelt wird, indem die Bruchteile ($k_1u_3$, $k_2u_e$) der Spannungen zu Null gemacht werden, welche aus den Spannungen an den Anschlüssen der Wicklung (8) für die dritte Harmonische und der Erregerwicklung (1) erhalten werden, und anschließend die Statik des Wechselstromgenerators negativ oder positiv auf den gewünschten wert eingestellt wird, indem eine geeignete Änderung des Koeffizienten $k_2$ oder $k_1$ vorgenommen wird.

6. Vorrichtung zur Durchführung des Verfahrens nach einem der vorstehenden Ansprüche, gebildet aus einer Speiseschaltung für den Erregerinduktor, die eine erste Hilfswicklung (8) umfaßt, welche die Spannung der dritten Harmonischen des Wechselstromgenerators abnimmt, sowie ein Erregerstrom-Regelglied (12) umfaßt, dadurch gekennzeichnet, daß die Speiseschaltung für den Erregerinduktor zusätzlich eine zweite Hilfswicklung (7) umfaßt, welche die Grundspannung des Wechselstromgenerators abnimmt, und daß das Erregerstrom-Regelglied (12) einerseits in Abhängigkeit von den Spannungen ($u_e,u_3$) an den Anschlüssen der Erregerwicklung (1) und der Wicklung (8) für die dritte Harmonische und andererseits von der Ausgangsspannung (U, V, W) des Wechselstromgenerators gesteuert wird.

7. Vorrichtung nach Anspruch 6, dadurch gekennzeichnet, daß der Regler (1a) einen Gleichrichter (14) mit hoher Eingangsimpedanz umfaßt, welcher an den Ausgang des Wechselstromgenerators angeschlossen ist, und einen Operationsverstärker (16) sowie Mittel (20) zur Spannungsaufteilung enthält, um einen variablen Bruchteil (ku) zu erzeugen, welcher die Ausgangsspannung (U, V, W) des Wechselstromgenerators anzeigt.

8. Vorrichtung nach Anspruch 6 oder 7, dadurch gekennzeichnet, daß sie eine Schaltung zur Verarbeitung der Spannung ($u_3$) umfaßt, welche an den Anschlüssen der Wicklung (8) für die dritte Harmonische abgenommen wird, und wobei diese Schaltung im wesentlichen Gleichrichtermittel (24) und eine vorzugsweise durch ein Potentiometer gebildete Teilereinheit. (25) enthält, um einen variablen Bruchteil ($-k_1 u_3$) herzustellen, welcher die genannte Spannung an den Anschlüssen der Wicklung (8) anzeigt.

9. Vorrichtung nach einem der Ansprüche 6 bis 8, dadurch gekennzeichnet, daß sie eine Schaltung zur Verarbeitung der Spannung ($u_e$) an den Anschlüssen des Erregerinduktors (1) umfaßt und diese Schaltung einen Verstärker (26), ein Filter (27) und eine Spannungsteilereinheit (28) wie ein Potentiometer enthält, um einen variablen Bruchteil ($k_2 u_e$) der genannten Spannung an den Anschlüssen der Erregerwicklung herzustellen.

10. Vorrichtung nach den Ansprüchen 7, 8 und 9, dadurch gekennzeichnet, daß die drei Regelspannungsbruchteile (ku, $k_2 u_2$, $-k_1 u_3$) zu einer Addier-Komparatorschaltung (30, 31) übertragen werden, an deren Referenzeingang eine vorbestimmte Referenzspannung (C) angelegt ist, wobei der Ausgang des Komparators (31) über einen Proportional-Integrierverstärker (33) mit dem Steuerorgan (12) der Erregerschaltung des Erregerinduktors (1) verbunden ist, wobei dieses Organ beispielsweise ein Leistungstransistor ist.

11. Vorrichtung nach einem der Ansprüche 6 bis 10, dadurch gekennzeichnet, daß der Speisekreis des Erregerinduktors (1) einen Widerstand (13) enthält, dessen zwischen seinen Anschlüssen auftretender Spannungsabfall an einen Komparator (34) angelegt wird, dessen Referenzeingang eine Referenzspannung empfängt und dessen Ausgang mit dem Steuerorgan (12) verbunden ist, um die Erregerstromstärke und folglich die Kurzschlußstromstärke auf einen vorbestimmten Wert zu begrenzen.

12. Bürstenloser Synchron-Wechselstromgenerator, dadurch gekennzeichnet, daß er eine Regelvorrichtung nach einem der Ansprüche 6 bis 11 enthält.